# FASCICULE DE BREVET EUROPEEN

(11) **EP 1 083 645 B1**
(45) Date de publication et mention de la délivrance du brevet: **30.12.2015**
(21) Numéro de dépôt: 00410097.0
(22) Date de dépôt: 11.08.2000
(51) Int. Cl.: H02H 6/00

(54) **Déclencheur électronique comportant un dispositif d'initialisation**
Elektronischer Auslöser mit Initialisierungseinrichtung
Electronic trip device comprising initializing apparatus

(30) Priorité: 09.09.1999 FR 9911440
(43) Date de publication de la demande: 14.03.2001
(73) Titulaire: Schneider Electric Industries SAS, 92500 Rueil-Malmaison (FR)
(72) Inventeur: Suptitz, Eric, Schneider Electric Industries SA, 38050 Grenoble cedex 09 (FR); Blanchard, Pierre, Schneider Electric Ind. SA, 38050 Grenoble cedex 09 (FR)
(74) Mandataire: Tripodi, Paul

(56) Documents cités:
- EP-A- 0 915 547
- EP-A1- 0 827 250
- FR-A1- 2 768 868
- US-A- 5 313 112

## Description

L'invention concerne un déclencheur électronique comportant :
- une unité de traitement recevant des signaux de courants représentatifs de courants circulant dans un réseau à protéger, comportant des moyens de protection et fournissant un signal de déclenchement lorsque lesdits courants dépassent des valeurs de déclenchement prédéterminées, et
- un dispositif d'initialisation de ladite unité de traitement selon la partie caractérisante de la revendication 1.

Dans les déclencheurs électroniques connus, des fonctions de déclenchement fournissent un ordre d'ouverture du disjoncteur lorsqu'au moins un courant qui traverse un pôle du disjoncteur dépasse un seuil de courant prédéterminé pendant un temps supérieur à celui correspondant à la courbe de déclenchement. Parmi ces fonctions, nous pouvons citer la fonction long retard, ou fonction thermique, la fonction court retard ou fonction magnétique, et la fonction de protection terre.

Certains déclencheurs comportent des fonctions de mémoire thermique après déclenchement appliquée à la fonction long retard. Un tel déclencheur est décrit dans les brevets FR 2 719 169, US 5,617,078 ou EP0827250.

Dans ce type de déclencheur, un dispositif de mémorisation simule le comportement thermique en utilisant les caractéristiques de décharge d'un condensateur dans une résistance. Ce dispositif est bien adapté pour une fonction thermique long retard avec déclenchement et ouverture du disjoncteur.

D'autres déclencheurs comportent des mémoires pour sauvegarder des valeurs de courants ou des informations de déclenchement ou d'états d'un disjoncteur. Ces mémoires sont généralement des "RAM" à alimentation par pile ou condensateur de très forte valeur, ou des "EEPROM" à écriture ou effacement électrique. La gestion de ces mémoires est associée au déclenchement et l'initialisation après déclenchement. Si l'initialisation se fait après des coupures de l'alimentation dues des défauts intermittents, il est très difficile de contrôler l'intégrité des données contenues dans les mémoires. Un tel déclencheur est décrit dans les demandes de brevet EP0915547 et FR2768868.

Ainsi, pour des défauts intermittents qui ne produisent pas de déclenchement mais qui arrêtent l'alimentation en courant des déclencheurs, les dispositif connus ne sont pas efficaces.

De plus, si ces défauts intermittents sont des défauts traités par des fonctions de protection court retard ou de protection terre, le traitement de l'initialisation à chaque retour de l'alimentation serait trop important et aurait une durée trop longue. Par exemple dans le cas d'une cellule avec une résistance et un condensateur, il faudrait un dispositif par type de protection et gérer en permanence la charge du condensateur.

L'invention a pour but un déclencheur comportant un dispositif d'initialisation permettant une initialisation rapide des fonctions de protection et ayant des valeurs d'initialisation très fiables.

Dans un déclencheur selon l'invention, le dispositif d'initialisation comporte des moyens d'initialisation après interruption comportant :
- au moins un registre de sauvegarde connecté aux moyens de protection pour sauvegarder une valeur d'au moins une grandeur d'une fonction de protection et pour fournir une valeur de ladite au moins une grandeur lors de l'initialisation de l'unité de traitement,
- un circuit d'alimentation de sauvegarde pour alimenter ledit au moins un registre de sauvegarde, et
- des moyens de contrôle du circuit d'alimentation de sauvegarde connectés à une entrée dudit au moins un registre pour remettre à zéro la valeur du registre lorsque une tension du circuit d'alimentation de sauvegarde baisse au-dessous d'un seuil prédéterminé.

De préférence, les moyens d'initialisation après interruption comportent un premier registre de sauvegarde connecté aux moyens de protection et aux moyens de contrôle pour sauvegarder une valeur d'une grandeur représentative d'une fonction de protection court retard.

De préférence, les moyens d'initialisation après interruption comportent un second registre de sauvegarde connecté aux moyens de protection et aux moyens de contrôle pour sauvegarder une valeur d'une grandeur représentative d'une fonction de protection terre.

Avantageusement, les moyens d'initialisation après interruption comportent un troisième registre de sauvegarde connecté aux moyens de protection et aux moyens de contrôle pour sauvegarder une valeur d'une grandeur représentative d'une fonction de protection long retard.

Dans un mode de réalisation préférentiel, les moyens de protection, au moins un registre de sauvegarde, et les moyens de contrôle d'un circuit d'alimentation sont disposés dans un même circuit intégré.

Dans un mode de réalisation particulier, le circuit d'alimentation de sauvegarde comporte une diode connectée entre une ligne d'alimentation principale et une ligne d'alimentation de sauvegarde, et un condensateur connecté entre la ligne d'alimentation de sauvegarde et une ligne de référence.

Avantageusement, le dispositif d'initialisation comporte des moyens d'initialisation après interruption et des moyens d'initialisation après déclenchement.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'un disjoncteur comportant un déclencheur de l'art antérieur ;
- la figure 2 représente un schéma d'une unité de traitement d'un déclencheur selon un mode de réalisation de l'invention ;
- la figure 3 représente un schéma détaillé d'une partie d'une unité de traitement comportant un dispositif d'initialisation selon un mode de réalisation de l'invention.

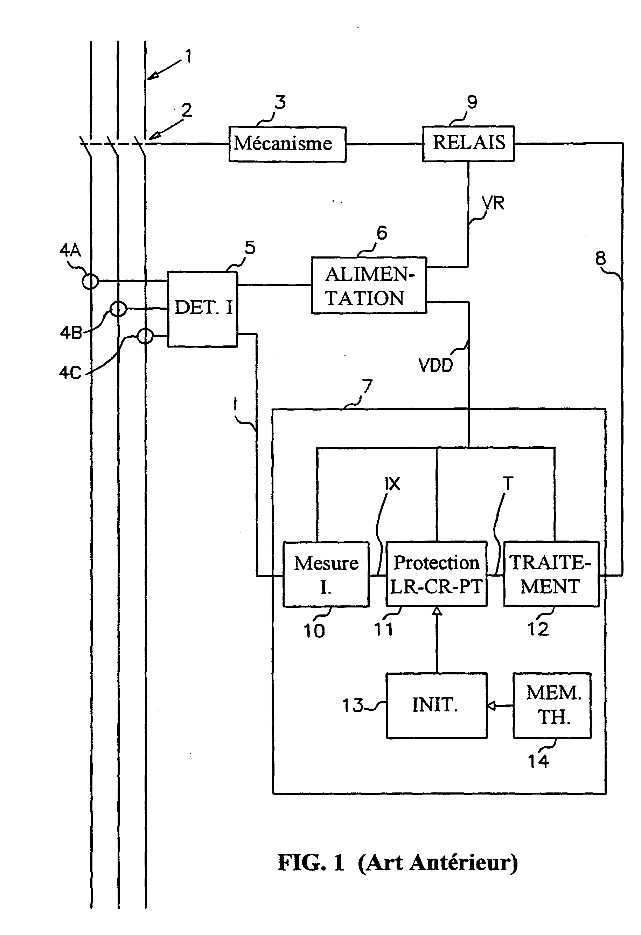

Le disjoncteur de la figure 1 protège un réseau électrique 1 en ouvrant des contacts 2 à l'aide d'un mécanisme 3. Dans ce disjoncteur, un déclencheur comporte des capteurs de courant 4A, 4B, 4C, associés à des conducteurs du réseau pour fournir des signaux de courant à un circuit de détection 5. Le circuit 5 fournit un courant électrique à un circuit d'alimentation 6, et des signaux de courant I représentatifs des courants circulant dans des conducteurs du réseau à une unité de traitement 7. L'unité de traitement 7 fournit un signal de déclenchement 8 à un relais 9 lorsque les signaux de courant I dépassent des seuils pendant des durées prédéterminées. Le circuit d'alimentation 6 fournit une tension d'alimentation à l'unité de traitement sur une ligne principale VDD, et une tension de commande de relais VR au relais de déclenchement. La tension de VR peut être différente de la tension d'alimentation de la ligne principale VDD.

L'unité de traitement 7 comporte un module 10 de mesure de courant recevant les signaux de courant I et fournissant des signaux de courant IX représentatifs de courant de phase et/ou de neutre, et/ou un signal représentatif de courant de terre à un module 11 de fonction de protection. Généralement, les signaux fournis au module 11 sont échantillonnés puis traités dans des filtres numériques pour effectuer des fonctions de protection long retard, court retard et/ou protection terre. Les fonctions de protection fournissent à un module de traitement 12 des valeurs de grandeur de protection T pour traiter le déclenchement. Par exemple, les valeurs fournies sont comparées à des seuils pour fournir un signal de déclenchement 8 lorsque lesdits seuils sont dépassés.

Un circuit d'initialisation 13 initialise une fonction de protection thermique ou long retard du module 11 en fonction de la valeur de la mémoire thermique fournie par un dispositif 14 de mémoire thermique après déclenchement.

Les déclencheurs de l'art antérieur ne permettent pas une initialisation correcte dans le cas de défauts intermittents qui arrêtent de fournir de l'alimentation et provoquent une initialisation des fonctions de protection à chaque retour du courant.

Dans un déclencheur selon un mode de réalisation de l'invention, une initialisation des fonctions de protection avec des valeurs de grandeur de sortie desdites fonctions de protection est possible à chaque interruption de courant provoquant une coupure de l'alimentation. Cette initialisation garantit une fiabilité élevée des valeurs initialisées.

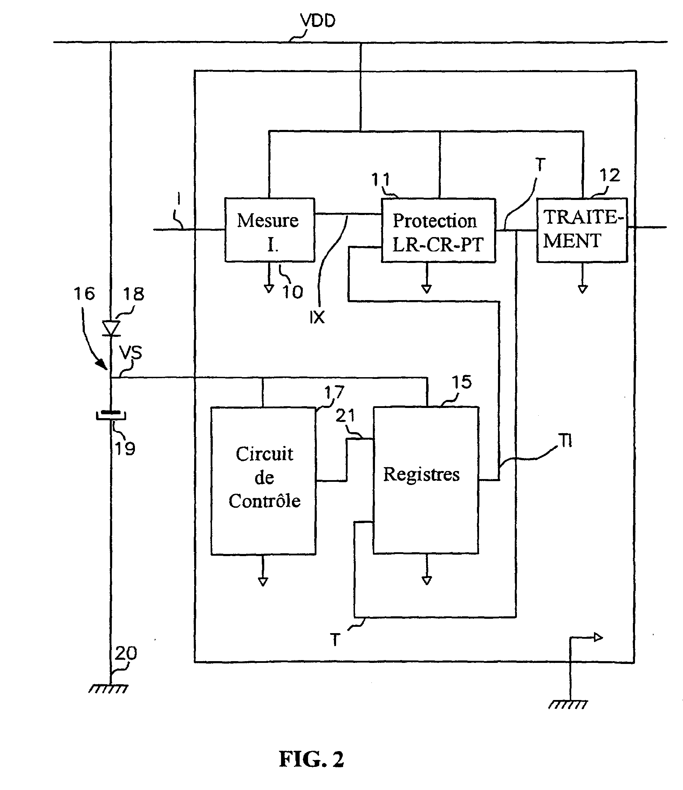

La figure 2 montre un schéma d'une unité de traitement d'un déclencheur selon un mode de réalisation de l'invention. Sur ce schéma l'unité de traitement comporte des moyens d'initialisation après interruption. Ces moyens comportent au moins un registre 15 de sauvegarde ayant une entrée connectée à une sortie du module 11 de fonction de protection pour recevoir des valeurs de grandeurs T, un circuit d'alimentation de sauvegarde 16, et un circuit de contrôle 17 du circuit d'alimentation.

Le registre 15 reçoit sur une entrée une valeur d'une grandeur T des fonctions de protection. Cette grandeur T peut être représentative de l'état thermique de la fonction long retard et/ou d'une variable de déclenchement équivalente des fonctions court retard ou protection terre. La grandeur T dépend de la valeur du courant d'entrée qui subit une intégration par rapport au temps en fonction de valeurs de réglages de seuil et de temporisations.

Lors de l'initialisation, le registre fournit sur une sortie une valeur TI à une entrée du module 11. La valeur TI initialise le module 11 à une valeur de T précédente avant interruption de l'alimentation de la ligne principale VDD.

L'alimentation du registre 15 est assurée par le circuit d'alimentation de sauvegarde 16 comportant une diode 18 connectée entre la ligne principale VDD et une ligne VS d'alimentation de sauvegarde et un condensateur 19 connecté entre la ligne VS et une ligne 20 de référence ou de masse. Le condensateur 19 constitue ainsi une réserve d'énergie pour alimenter pendant une interruption de courant, le registre 15 relié à la ligne VS.

Si une interruption de courant a une durée très longue de l'ordre de plusieurs minutes, il n'est plus nécessaire de garder et de réinitialiser des grandeurs T avec des valeurs précédentes, notamment les fonctions de court retard ou de protection terre. De plus, la valeur thermique du long retard doit évoluer et peut être réinitialisée par des initialisations en mémoire thermique.

Une interruption trop longue risque de décharger le condensateur et altérer les données du registre si la tension de la ligne VS baisse en dessous de la tension de fonctionnement dudit registre.

Pour garantir une intégrité des données sauvegardées dans le registre, le circuit de contrôle 17 connecté à la ligne VS contrôle la tension d'alimentation appliquée au registre et fournit un signal 21 de remise à zéro dès que la tension sur VS n'est plus suffisante.

Le signal 21 de remise à zéro efface les données enregistrées dans le registre 15. Ainsi, lors de l'initialisation, les fonctions de protection commencent par des valeurs nulles ou des valeurs par défaut. Les données fournies par le registre sont nulles si l'alimentation VS a baissé ou sont fiables si la tension a été présente pendant toute la durée de l'interruption de courant.

La durée de maintien des données enregistrées est de préférence inférieure à une minute et le condensateur 19 a, de préférence, une valeur inférieure à 50 micro farads (50 µF). Dans un mode de réalisation préférentiel, la durée de maintien est sensiblement de 10 secondes et la valeur du condensateur 19 est sensiblement égale à 4,7 micro farads (4,7 µF).

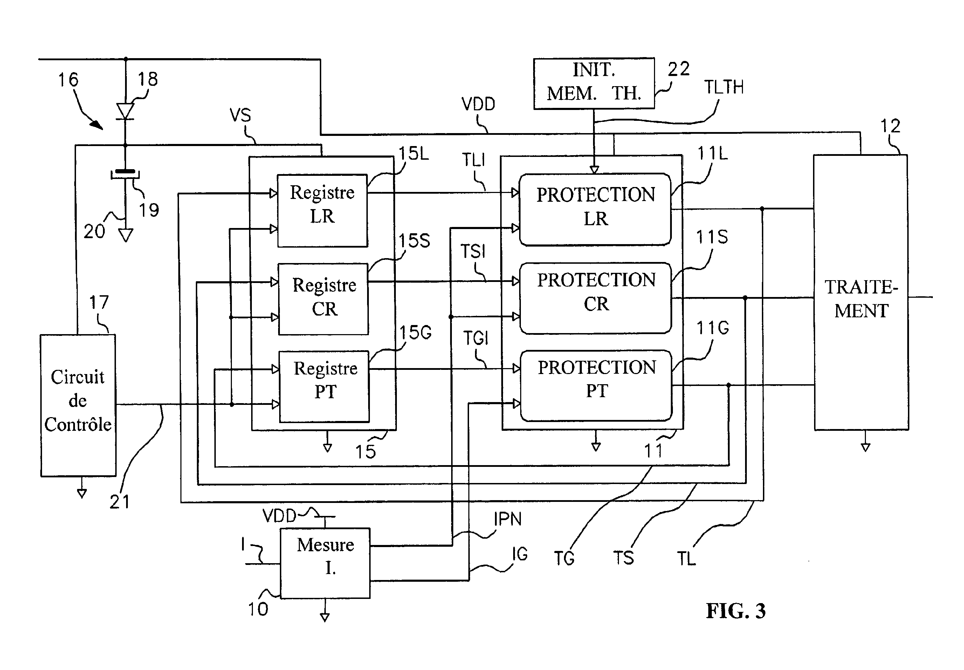

Le schéma de la figure 3 montre en détail une unité de traitement d'un déclencheur selon un mode de réalisation de l'invention. Sur ce schéma, le module de mesure 10 fournit des signaux IPN représentatifs de courants de phase et de neutre à un module 11L de fonctions de protection long retard et à un module 11S de fonction de protection court retard, et un signal IG représentatif d'un courant homopolaire ou de défaut terre à un module 11G de fonction de protection terre.

Les modules 11L, 11S et 11G peuvent faire partie du module 11. Ils fournissent en sortie respectivement une grandeur TL représentative de la fonction thermique ou long retard, une grandeur TS représentative de la fonction court- retard et une grandeur TG représentative de la fonction protection terre. Par exemple, les valeurs des grandeurs TL, TS et TG sont croissantes si les signaux représentatifs des courants correspondants IPN ou IG dépassent des seuils prédéterminés et sont décroissantes si lesdits signaux de courant sont inférieurs audits seuils.

Des signaux représentatifs de grandeurs TL, TS et TG sont appliqués au module de traitement 12 qui traite le déclenchement.

Le registre 15 est composé de trois registres 15L, 15S et 15G. Un premier registre 15L reçoit une valeur de la grandeur TL et fournit au module 11L une valeur d'initialisation TLI. Un second registre 15S reçoit une valeur de la grandeur TS et fournit au module 11S une valeur d'initialisation TSI. Un troisième registre 15G reçoit une valeur de la grandeur TG et fournit au module 11G une valeur d'initialisation TGI.

Chaque registre comporte une entrée d'effacement ou de remise à zéro commandée par le signal 21 du circuit de contrôle 17.

Ainsi, si le courant est interrompu dans les conducteurs, l'alimentation de la ligne VDD est aussi interrompue et les registres maintiennent les valeurs des grandeurs TL, TS et TG. Si l'interruption dure par exemple, une dizaine de secondes, à l'initialisation les registres ne seront pas effacés et les fonctions de protection se retrouvent automatiquement dans l'état où elles étaient avant l'interruption.

Si l'interruption dure plusieurs minutes, les registres seront remis à zéro et les fonctions de protection seront initialisées à des valeurs par défaut, par exemple, avec des valeurs nulles. Même si l'interruption dure plusieurs minutes, en particulier après un déclenchement, la fonction de protection long retard, peut être initialisée avec une valeur de mémoire thermique. Sur la figure 3, un circuit d'initialisation 22 en mémoire thermique fournit une valeur TLTH à une entrée du module 11L de fonction long retard.

Les registres opèrent une fonction de sauvegarde quelle que soit la cause de l'interruption de courant, par exemple, en défaut intermittent, en déclenchement d'un disjoncteur ou lors de manoeuvres d'interrupteurs ou de contacts sur le réseau.

Par exemple, la fonction long retard peut être initialisée en priorité par la valeur du registre si les données sont valides avec des valeurs non nulles ou avec une valeur de mémoire thermique si les valeurs sont nulles.

Dans un autre mode de réalisation, il est avantageux de choisir une valeur la plus élevée entre la valeur sauvegardée dans le registre ou une valeur de mémoire thermique.

## Revendications

1. Déclencheur électronique comportant :
- une unité de traitement (7) recevant des signaux de courants (I) représentatifs de courants circulant dans un réseau à protéger, comportant des moyens (11) de protection et fournissant un signal (8) de déclenchement lorsque lesdits courants dépassent des valeurs de déclenchement prédéterminées, et
- un dispositif d'initialisation (13) de ladite unité de traitement,
déclencheur **caractérisé en ce que** le dispositif d'initialisation comporte des moyens (15, 16, 17) d'initialisation après interruption comportant :
- au moins un registre (15, 15L, 15S, 15G) de sauvegarde connecté aux moyens de protection pour sauvegarder une valeur d'au moins une grandeur (T, TL, TS, TG) d'une fonction de protection et pour fournir une valeur (TI, TLI, TSI, TGI) de ladite au moins une grandeur lors de l'initialisation de l'unité de traitement,
- un circuit d'alimentation (16, 18, 19, VS) de sauvegarde pour alimenter ledit au moins un registre de sauvegarde, et
- des moyens (17) de contrôle du circuit d'alimentation de sauvegarde connectés à une entrée dudit au moins un registre pour remettre à zéro la valeur du registre lorsque une tension (VS) du circuit d'alimentation de sauvegarde baisse au-dessous d'un seuil prédéterminé.

2. Déclencheur selon la revendication 1, **caractérisé en ce que** les moyens d'initialisation après interruption comportent un premier registre (15S) de sauvegarde connecté aux moyens de protection (11, 11 S) et aux moyens (17) de contrôle pour sauvegarder une valeur d'une grandeur (TS) représentative d'une fonction de protection court retard.

3. Déclencheur selon l'une des revendications 1 ou 2, **caractérisé en ce que** les moyens d'initialisation après interruption comportent un second registre (15G) de sauvegarde connecté aux moyens de protection (11, 11G) et aux moyens (17) de contrôle pour sauvegarder une valeur d'une grandeur (TG) représentative d'une fonction de protection terre.

4. Déclencheur selon l'une quelconque des revendications 1 à 3, **caractérisé en ce que** les moyens d'initialisation après interruption comportent un troisième registre (15L) de sauvegarde connecté aux moyens de protection (11, 11L) et aux moyens de contrôle (17) pour sauvegarder une valeur d'une grandeur (TL) représentative d'une fonction de protection long retard.

5. Déclencheur selon l'une quelconque des revendications 1 à 4, **caractérisé en ce que** les moyens (11, 11L, 11S, 11G) de protection, au moins un registre (15, 15L, 15S, 15G) de sauvegarde, et les moyens (17) de contrôle d'un circuit d'alimentation sont disposés dans un même circuit intégré.

6. Déclencheur selon l'une quelconque des revendications 1 à 5, **caractérisé en ce que** le circuit (16) d'alimentation de sauvegarde comporte une diode (18) connectée entre une ligne (VDD) d'alimentation principale et une ligne (VS) d'alimentation de sauvegarde, et un condensateur (19) connecté entre la ligne d'alimentation de sauvegarde et une ligne (20) de référence.

7. Déclencheur selon l'une quelconque des revendications 1 à 6, **caractérisé en ce que** le dispositif d'initialisation comporte des moyens (15, 16, 17) d'initialisation après interruption et des moyens (22) d'initialisation après déclenchement.

## Patentansprüche

1. Elektronischer Auslöser, umfassend:
- eine Verarbeitungseinheit (7), die Stromsignale (I) empfängt, die für Ströme repräsentativ sind, die in einem zu schützenden Netz fließen, die Schutzmittel (11) aufweist und ein Auslösesignal (8) abgibt, wenn die Ströme vorbestimmte Werte überschreiten, und
- eine Vorrichtung zum Initialisieren (13) der Verarbeitungseinheit,
wobei der Auslöser **dadurch gekennzeichnet, dass** die Vorrichtung zum Initialisieren Mittel (15, 16, 17) zum Initialisieren nach einer Unterbrechung aufweist, umfassend:
- mindestens ein Sicherungsregister (15, 15L, 15S, 15G), das mit den Schutzmitteln verbunden ist, um einen Wert von mindestens einer Größe (T, TL, TS, TG) einer Schutzfunktion zu sichern und einen Wert (TI, TLI, TSI, TGI) der mindestens einen Größe bei dem Initialisieren der Verarbeitungseinheit bereitzustellen,
- einen Versorgungsstromkreis (16, 18, 19, VS) zum Sichern, um das mindestens eine Sicherungsregister zu speisen, und
- Kontrollmittel (17) des Versorgungsstromkreises zum Sichern, die mit einem Eingang des mindestens einen Registers verbunden sind, um den Wert des Registers auf Null zurückzusetzen, wenn eine Spannung (VS) des Versorgungsstromkreises zum Sichern unter einen vorgegebenen Schwellenwert sinkt.

2. Auslöser nach Anspruch 1, **dadurch gekennzeichnet, dass** die Mittel zum Initialisieren nach einer Unterbrechung ein erstes Sicherungsregister (15S) aufweisen, das mit den Schutzmitteln (11, 11 S) und den Kontrollmitteln (17) verbunden ist, um einen Wert von einer Größe (TS) zu sichern, die für eine Kurzzeitverzögerungs-Schutzfunktionen repräsentativ ist.

3. Auslöser nach einem der Ansprüche 1 oder 2, **dadurch gekennzeichnet, dass** die Mittel zum Initialisieren nach einer Unterbrechung ein zweites Sicherungsregister (15G) aufweisen, das mit den Schutzmitteln (11, 11 G) und den Kontrollmitteln (17) verbunden ist, um einen Wert von einer Größe (TG) zu sichern, die für eine Erdschluss-Schutzfunktion repräsentativ ist.

4. Auslöser nach einem der Ansprüche 1 bis 3, **dadurch gekennzeichnet, dass** die Mittel zum Initialisieren nach einer Unterbrechung ein drittes Sicherungsregister (15L) aufweisen, das mit den Schutzmitteln (11, 11 L) und den Kontrollmitteln (17) verbunden ist, um einen Wert von einer Größe (TL) zu sichern, die für eine Langzeitverzögerungs-Schutzfunktion repräsentativ ist.

5. Auslöser nach einem der Ansprüche 1 bis 4, **dadurch gekennzeichnet, dass** die Schutzmittel (11, 11 L, 11 S, 11 G), mindestens ein Sicherungsregister (15, 15L, 15S, 15G) und die Kontrollmittel (17) eines Versorgungsstromkreis in einem gleichen integrierten Schaltkreis angeordnet sind.

6. Auslöser nach einem der Ansprüche 1 bis 5, **dadurch gekennzeichnet, dass** der Versorgungsstromkreis (16) zum Sichern eine Diode (18), die zwischen einer Hauptstromversorgungsleitung (VDD) und einer Sicherungsstromversorgungsleitung (VS) angeschlossen ist, und einen Kondensator (19) aufweist, der zwischen der Sicherungsstromversorgungsleitung und einer Bezugsleitung (20) angeschlossen ist.

7. Auslöser nach einem der Ansprüche 1 bis 6, **dadurch gekennzeichnet, dass** die Vorrichtung zum Initialisieren Mittel (15, 16, 17) zum Initialisieren nach einer Unterbrechung und Mittel (22) zum Initialisieren nach einem Auslösen aufweist.

## Claims

1. Electronic trip device comprising:
- a processing unit (7) receiving current signals (I) representative of currents flowing in a network to be protected, comprising protection means (11) and providing a trip signal (8) when said currents exceed predetermined trip values; and
- an initializing apparatus (13) of said processing unit,
a trip device **characterized in that** the initializing apparatus comprises post-interruption initializing means (15, 16, 17), comprising:
- at least one backup register (15, 15L, 15S, 15G) connected to the protection means for backing up a value of at least one quantity (T, TL, TS, TG) of a protection function and for providing a value (TI, TLI, TSI, TGI) of said at least one quantity during the initialization of the processing unit;
- a backup power supply circuit (16, 18, 19, VS) for supplying power to said at least one backup register; and
- monitoring means (17) of the backup power supply circuit, which are connected to an input of said at least one register, for resetting the value of the register to zero when a voltage (VS) of the backup power supply circuit drops below a predetermined threshold.

2. Trip device according to Claim 1, **characterized in that** the post-interruption initializing means comprise a first backup register (15S), connected to the protection means (11, 11S) and to the monitoring means (17), for backing up a value of a quantity (TS) representative of a short-delay protection function.

3. Trip device according to either of Claims 1 and 2, **characterized in that** the post-interruption initializing means comprise a second backup register (15G), connected to the protection means (11, 11G) and to the monitoring means (17), for backing up a value of a quantity (TG) representative of an earth protection function.

4. Trip device according to any one of Claims 1 to 3, **characterized in that** the post-interruption initializing means comprise a third backup register (15L), connected to the protection means (11, 11 L) and to the monitoring means (17), for backing up a value of a quantity (TL) representative of a long-delay protection function.

5. Trip device according to any one of Claims 1 to 4, **characterized in that** the protection means (11, 11 L, 11 S, 11 G), at least one backup register (15, 15L, 15S, 15G) and the monitoring means (17) of a power supply circuit are arranged within one and the same integrated circuit.

6. Trip device according to any one of Claims 1 to 5, **characterized in that** the backup power supply circuit (16) comprises a diode (18) connected between a main power supply line (VDD) and a backup power supply line (VS), and a capacitor (19) connected between the backup power supply line and a reference line (20).

7. Trip device according to any one of Claims 1 to 6, **characterized in that** the initializing apparatus comprises post-interruption initializing means (15, 16, 17) and post-tripping initializing means (22).
